## Europäisches Patentamt
## European Patent Office
## Office européen des brevets

(11) Veröffentlichungsnummer: **0 094 553**
**B1**

# EUROPÄISCHE PATENTSCHRIFT

(45) Veröffentlichungstag der Patentschrift:
10.08.88

(51) Int. Cl.⁴: **B 01 D 3/38**

(21) Anmeldenummer: **83104370.8**

(22) Anmeldetag: **04.05.83**

(54) **Verfahren zur umweltfreundlichen Rückgewinnung von Lösungsmitteln.**

(30) Priorität: **15.05.82 DE 3218478**

(43) Veröffentlichungstag der Anmeldung:
**23.11.83 Patentblatt 83/47**

(45) Bekanntmachung des Hinweises auf die Patenterteilung:
**10.08.88 Patentblatt 88/32**

(84) Benannte Vertragsstaaten:
**AT DE FR GB IT NL SE**

(56) Entgegenhaltungen:
**DE-A-2 909 030**
**DE-A-2 918 979**
**DE-A-3 002 984**
**US-A-3 471 371**

(73) Patentinhaber: **Edeleanu Gesellschaft mbH, Stresemannallee 36, D-6000 Frankfurt/Main 70 (DE)**

(72) Erfinder: **Wirtz, Gerhard, Fasanenweg 12, D-6000 Frankfurt/Main (DE)**

(74) Vertreter: **Schupfner, Gerhard D., Müller, Schupfner & Gauger Karlstrasse 5 Postfach 14 27, D-2110 Buchholz/Nordheide (DE)**

## Beschreibung

Die vorliegende Erfindung bezieht sich auf ein Verfahren zur umweltfreundlichen Rückgewinnung von wasserlöslichen und wasserdampfabstreifbaren Lösungsmitteln durch Abstreifen derselben mit Wasserdampf in einer Abstreifkolonne, insbesondere bei Lösungsmittelextraktionsverfahren von im Extrakt und im Raffinat verbliebenen Lösungsmittelmengen jeweils in einer Extraktabstreifkolonne und einer Raffinatabstreifkolonne, Überführung der Kondensate der lösungsmittelhaltigen Kopfdämpfe in einen Abscheider, Auftrennung in zwei Phasen, Abziehen der wäßrigen Phase des Abscheiders, und Abtreiben der in der wäßrigen Phase verbliebenen Lösungsmittelmengen mit Wasserdampf in einer Wasserabstreifkolonne und Einleiten des Kondensates der Kopfdämpfe in den gleichen Abscheider, Sammeln des von Lösungsmittel befreiten Wassers im Sumpf der Abstreifkolonne, Abziehung und Überführung in einen Behälter.

Ein solches Verfahren zur Reinigung von Lösungsmittel enthaltenden Abwässern, die bei der Rückgewinnung von Lösungsmitteldämpfen aus Luft anfallen, ist aus DE-A-2 909 030 bekannt.

In der Mineralöltechnik wie auch in der allgemeinen chemischen Technik werden Lösungsmittelextraktionsverfahren eingesetzt um Stoffgemische mit Hilfe der unterschiedlichen Löslichkeit ihrer Komponenten in Lösungsmitteln bzw. in Lösungsmittelgemischen zu trennen. Die im Extrakt enthaltene Hauptmenge des Lösungsmittels wie auch die im Raffinat befindlichen kleinen Lösungsmittelmengen müssen zurückgewonnen werden, was üblicherweise in einer Mehrstufenverdampferanlage vorgenommen wird.

Aus der Lösungsmittelrückgewinnung etwa einer Mineralölextraktionsanlage werden z. B. außer einem Lösungsmittelstrom ein weitgehend von Lösungsmittel befreiter Raffinat- sowie ein Extraktstrom abgezogen, die die getrennten Ölkomponenten enthalten. Diese Ströme enthalten jedoch immer noch geringe Lösungsmittelmengen. Üblicherweise erfolgt die Abtrennung dieser Restmengen in einer Abstreifkolonne (Strippkolonne), in der die Lösungsmittelanteile mit Hilfe von Wasserdampf ausgetrieben werden. Da die Spezifikation der Produkte nur die Anwesenheit von minimalen Lösungsmittelmengen gestattet, und somit deren Entfernung auf wenige ppm erforderlich ist, muß der Abstreifdampf frei von Lösungsmitteln sein. Dieser mit Lösungsmittelanteilen beladene Wasserdampf wird am Kopf der Abstreifkolonne abgezogen, in einem Kondensator kondensiert und in einem nachgeschalteten Abscheider das Kondensat in eine Lösungsmittel- und eine wäßrige Phase getrennt. Sowohl die Lösungsmittelphase als auch die wäßrige Phase enthalten geringe Ölmengen. Entsprechend den physikalischen Eigenschaften des jeweiligen Lösungsmittels sind auch in der wäßrigen Phase noch Lösungsmittelreste enthalten. Deshalb wird die wäßrige Phase in eine Kolonne eingeleitet, in der ebenfalls mit Wasserdampf diese Lösungsmittelreste ausgetrieben werden und das gereinigte Wasser am Sumpf der Kolonne abgezogen und aus der Anlage entfernt wird. B. Riedinger, Die Verarbeitung des Erdöls, Springer Verlag 1971, Seiten 729, 730.

Über Abwasserleitungen strömen diese Wassermengen wegen der in ihnen enthaltenen möglichen Ölverunreinigung zur Abwasseraufbereitungsanlage. Nach den neuen Gesetzen, die das Verursacherprinzip zur Grundlage haben, werden die Abwassermengen mit hohen Abwasserabgaben belastet. Außerdem verursacht die Abwasseraufbereitung noch zusätzliche Kosten. Es muß daher das Ziel sein, in der Mineralölraffination die Abwassermengen so gering wie möglich zu halten oder wenn möglich auf die Abgabe von Abwasser ganz zu verzichten.

Eine Möglichkeit, im Abstreif-Sektor einer Lösungsmittelrückgewinnung den Anfall von beträchtlichen Abwassermengen zu vermeiden, ist der Ersatz des Abstreifdampfes (Strippdampfes) durch im Kreislauf geführte Abstreifgase (Strippgase). B. Riedinger, Die Verarbeitung des Erdöls, Springer Verlag 1971, Seite 621. Bei Verwendung von Abstreifgasen wirken sich jedoch die für die Gaskompression erforderlichen Energiemengen nachteilig aus.

Es bestand daher die Aufgabe, ein Verfahren zum Abtreiben von Lösungsmitteln mittels Wasserdampf bereitzustellen, das es gestattet, so weit wie irgend möglich auf die Abgabe von Abwasser in das Abwassernetz zu verzichten und insbesondere bei dem Betreiben von Lösungsmittelextraktionsanlagen ohne die Ableitung von Abwasser aus der Anlage auszukommen.

Diese Aufgabe wird erfindungsgemäß dadurch gelöst, daß das vom Lösungsmittel befreite, in den Behälter überführte Wasser durch indirekten Wärmetausch mit heißen, aus der Verdampferstation der Lösungsmittelrückgewinnung abgezogenen Prozeßstromen wieder verdampft und in Form von Wasserdampf als Abstreifdampf jeweils in die Abstreifkolonnen zurückgeführt und nur in der Anfahrphase den einzelnen Abstreifkolonnen Fremddampf als Abstreifdampf sowie bei zu geringen aus den Prozeßströmen stammenden Wärmemengen zur Wiederverdampfung des Wassers Wärmeenergie von außen zugeführt wird.

Erfindungsgemäß werden solche Lösungsmittel rückgewonnen welche teilweise oder vollständig wasserlöslich sind und mit Dampf abgetrieben werden können. Es sind dies insbesondere Methyläthylketon, Furfurol, Methylenchlorid und Dichloräthan.

Bei dem erfindungsgemäßen Verfahren fällt trotz Einsatz von Abstreifdampf in der Lösungsmittelrückgewinnung praktisch kein verschmutztes Abwasser mehr an. Ggf. sind gelegentlich oder in regelmäßigen Abständen geringe Mengen Wasser (z. B bis zu 5 Vol.-%) abzuziehen, um eine Aufkonzentrierung unerwünschter Begleitsubstanzen im Wasser zu verhindern. Die für den Abstreifdampf benötigten Wassermengen werden im Kreislauf geführt, während gleichzeitig bisher nicht genutzte Wärme, enthalten in den bei der Lösungsmittelrückgewinnung anfallenden Prozeßströmen (z. B. heißes Lösungsmittel), zur Erzeugung von Abstreifdampf genutzt wird.

Das erfindungsgemäße Verfahren wird beispielsweise für eine Mineralölextraktionsanlage anhand des in der

2

**0 094 553**

beigefügten Figur wiedergegebenen Fließschemas wie folgt erläuternd beschrieben:

Mit der Leitung 1 wird der Abstreifkolonne 2 die noch Lösungsmittelreste enthaltende Ölfraktion, Raffinat oder Extrakt, zugeleitet. Leitung 3 versorgt Kolonne 2 in der Anfahrphase mit von außen zugeführtem Abstreifdampf. Im Sumpf der Kolonne 2 sammelt sich das von Lösungsmittel befreite Öl und wird mit Leitung 4 über Pumpe 5 zum Lagertank abgezogen. Der am Kopf der Kolonne 2 abgezogene Dampf besteht aus dem eingeblasenen Abstreifdampf, den aus dem Öl abgetriebenen Lösungsmittelresten und ggf. Ölspuren. Leitung 6 transportiert ihn zum Kondensator 7. Die im Kondensator 7 anfallende flüssige Phase gelangt über Leitung 8 zum Abscheider 9 und trennt sich dort in die wäßrige und eine lösungsmittelhaltige Phase, die zur Extraktionsstufe zurückgeleitet werden kann. Die wäßrige Phase gelangt vom Abscheider 9 über Leitung 10 (für den Transport notwendige Pumpen sind nicht eingezeichnet) zur Kolonne 11. Hier wird in der Anfahrphase mittels Leitung 12 Abstreifdampf von außen herangeführt, der die in der wäßrigen Phase enthaltenen Lösungsmittelreste über Kopf mittels Leitung 13 aus Kolonne 11 entfernt.

Nach Kondensation im Kondensator 14 gelangt das wäßrige, Lösungsmittelreste enthaltende Kondensat ebenfalls in Abscheider 9. Im Sumpf der Kolonne 11 sammelt sich das lösungsmittelfreie Wasser, das jedoch noch geringe Ölanteile enthalten kann. Dieses Wasser wird jedoch nicht wie üblich in den Abwasserkanal geleitet, sondern mittels Leitung 15 in den Behälter 16. Hier sammelt sich das Wasser und die Menge nimmt im Verlauf der Anfahrphase zu. In diesen Behälter 16 ist die Heizschlange 17 eingebaut, die von aus der Lösungsmittelrückgewinnung stammendem heißen (ca 140°C) Produkt durchströmt wird.

Dieses aus der Lösungsmittelrückgewinnung abgezogene heiße Produkt, z. B. Lösungsmittel, muß vor Wiedereinsatz in der Extraktionsstufe gekühlt werden. Diese Kühlung erfolgt üblicherweise durch Luft- oder Wasserkühler, in denen die Wärme nutzlos verloren geht, da eine Verwendungsmöglichkeit in den üblichen Verfahrensschemen nicht gegeben ist.

Erfindungsgemäß wird mit der Wärme dieser heißen Lösungsmittelströme die sich im Behälter 16 sammelnde Wassermenge bei einem Druck von 1,5 bar absolut und 110°C wieder verdampft. Die abgegebene Wärmemenge bei der Abkühlung des Lösungsmittels von 140 auf 120°C reicht in den meisten Fällen für die Dampferzeugung voll aus. Ggf. kann über Schlange 18 eine Zusatzheizung mit Dampf erfolgen. Dieser Wasserdampf aus Behälter 18 gelangt über Leitung 19 und Ventil 20 in die bei einem Druck von 0,3 bar absolut arbeitende Abstreifkolonne 2. Die mit Leitung 19 zugeführte Dampfmenge nimmt im Verlauf der Anfahrzeit zu. Entsprechend wird die mit Leitung 3 herangeführte Dampfmenge gedrosselt. Weitere Wasserdampfmengen aus Behälter 16 gehen über Leitung 21 zur Kolonne 11. Behälter 16 und Kolonne 11 haben den gleichen Druck von 1,5 bar absolut. Auch bei Kolonne 11 wird die durch Leitung 12 zugeführte Dampfmenge in dem Maße gedrosselt, wie die im Behälter 16 erzeugte Dampfmenge zunimmt.

Am Ende der Anfahrphase wird sowohl die Dampfleitung 3 wie auch die Dampfleitung 12 geschlossen. Dann hat sich nämlich ein Dampf/Wasser- Kreislauf eingestellt, der keinen zusätzlichen Fremddampf mehr benötigt.

Abwasser, das in Abwasseraufbereitungsanlagen behandelt werden müßte, fällt nicht mehr an.

Zur Vereinfachung zeigt das Fließschema nur eine Abstreifkolonne zur Abtrennung der im Öl enthaltenen Lösungsmittelreste, wobei am Kopf der lösungsmittelhaltige Wasserdampf abgezogen wird, der nach Kondensation in den Abscheider gelangt.

In der industriellen Praxis ist es jedoch üblich, daß die Kondensate vom Extrakt- und vom Raffinatabstreifer in den gleichen Abscheider geleitet werden und die dabei aus dem Kondensat beider Abstreifkolonnen anfallende wäßrige Phase in nur einer Wasserabstreifkolonne behandelt wird.

Die im Behälter 16 erzeugte Wasserdampfmenge ist so groß, daß der Wasserdampf nicht nur einer Abstreifkolonne, sondern sowohl dem Extraktabstreifer als auch dem Raffinatabstreifer zugeleitet wird.

So fallen z. B. in der Lösungsmittelrückgewinnungsanlage einer mit Furfurol betriebenen Mineralölextraktion folgende Mengen pro Tag an:

360 t Extrakt

840 t Raffinat

Der Extraktabstreifer des Standes der Tecknik verbraucht bei der angegebenen Tageskapazität

|  | 18 t Wasserdampf, |
| der Raffinatabstreifer | 35 t Wasserdampf, |
| der Wasserabstreifer | 32 t Wasserdampf. |

Erfindungsgemäß werden somit 85 t/Tag Wasserdampf eingespart und der Anfall von 85 m /Tag Abwasser unterbunden.

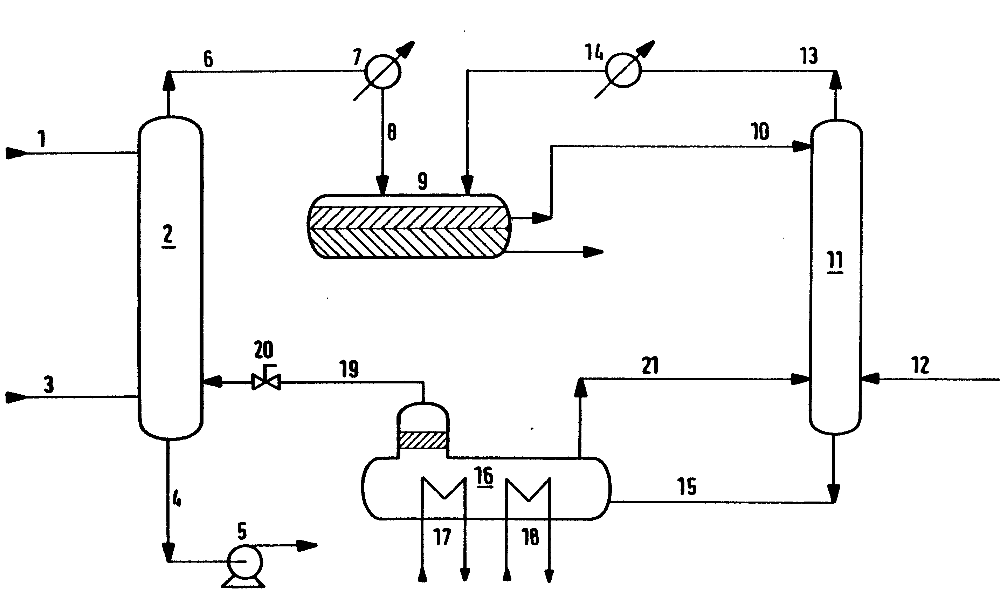

**Patentanspruch**

Verfahren zur umweltfreundlichen Rückgewinnung von wasserlöslichen und wasserdampfabstreifbaren Lösungsmitteln durch Abstreifen derselben mit Wasserdampf in einer Abstreifkolonne (2), insbesondere bei Lösungsmittelextraktionsverfahren von im Extrakt und im Raffinat verbliebenen Lösungsmittelmengen jeweils in einer Extraktabstreifkolonne und einer Raffinatabstreifkolonne, Überführung der Kondensate der lösungsmittelhaltigen Kopfdämpfe in einen Abscheider (9), Auftrennung in zwei Phasen, Abziehen der wäßrigen Phase des Abscheiders, und Abtreiben der in der wäßrigen Phase verbliebenen Lösungsmittelmengen mit Wasserdampf in einer Wasserabstreifkolonne (11) und Einleiten des Kondensates der Kopfdämpfe in den Abscheider (9), Sammeln des von Lösungsmittel befreiten Wassers im Sumpf der Wasserabstreifkolonne (11), Abziehung und Überführung desselben in einen Behälter (16), <u>dadurch gekennzeichnet</u>, daß man in dem Behälter (16) das Wasser durch indirekten Wärmetausch mit heißen, aus der Verdampferstation der Lösungsmittelrückgewinnung abgezogenen Prozeßströmen wieder verdampft und in Form von Wasserdampf als Abstreifdampf jeweils in die Abstreifkolonnen (2,11) zurückführt und nur in der Anfahrphase den einzelnen Abstreifkolonnen Fremddampf als Abstreifdampf sowie bei zu geringen aus den Prozeßströmen stammenden Wärmemengen zur Wiederverdampfung des Wassers Wärmeenergie von außen zuführt.

## Claim

A process for nuisance-free recovery of solvents which are water-soluble and capable of being steam-stripped by steam-stripping said solvents in a stripper column (2), especially in solvent extraction processes of residual solvent quantities in the extract and the raffinate in an extract stripper column and a raffinate stripper column, respectively, transferring the condensates of the solvent containing overhead vapours to a separator (9), effecting separation into two phases, removing the aqueous phase from the separator, and steam-stripping the residual solvent in the aqueous phase in a steam stripper (11) and introducing the condensate from the overhead vapours into the separator (9), collecting the water from which the solvent has been removed in the bottom of the steam stripper (11), withdrawing and transferring the same to a vessel (16), characterised in that within said vessel (16) the water is vapourised again by indirect heat transfer with hot process streams withdrawn from the vapourising unit of the solvent recovery process and is recycled in the form of steam for use as stripping steam in the respective steam strippers (2, 11), and extraneous steam is supplied as stripping steam to the respective steam strippers only in the starting-up phase, and thermal energy is supplied from outside for water vapourising when the quantities of heat derived from the process streams are insufficient.

## Revendication

Procédé pour récupérer de manière non polluante des solvants hydrosolubles et pouvant être entraînés par la vapeur d'eau, par entraînement de ceux-ci avec de la vapeur d'eau dans une colonne (2) de séparation par entraînement, en particulier dans un procédé d'extraction au solvant de quantités de solvant restées dans l'extrait dans une colonne de séparation d'extrait par entraînement, et dans le produit raffiné dans une colonne de séparation de produit raffiné par entraînement, transport du condensat des vapeurs de tête contenant des solvants dans un séparateur (9), division en deux phases, soutirage de la phase aqueuse du séparateur et séparation par entraînement à la vapeur d'eau des quantités de solvant restées dans la phase aqueuse, dans une colonne (11) de séparation de l'eau par entraînement, et introduction du condensat des vapeurs de tête dans le séparateur (9), collecte de l'eau libérée des solvants dans le fond de la colonne de séparation d'eau par entraînement (11), soutirage et transport de celle-ci dans un récipient (16), caractérisé en ce qu'on revaporise, dans le récipient (16), l'eau par échange de chaleur indirect avec des courants de traitement chauds soutirés de la station de vaporisation de la récupération de solvants et en ce qu'on recycle dans chacune des colonnes (2, 11) de séparation par entraînement la vapeur de séparation par entraînement sous forme de vapeur d'eau et en ce qu'on introduit de l'extérieur, uniquement dans la phase d'amorçage, de la vapeur étrangère en tant que vapeur de séparation par entraînement, dans les colonnes respectives de séparation par entraînement, ainsi que de l'énergie calorifique pour la revaporisation de l'eau lorsque les quantités de chaleur provenant des courants de traitement sont trop faibles.